# EUROPEAN PATENT SPECIFICATION

(11) **EP 2 221 157 B1**
(45) Date of publication and mention of the grant of the patent: **04.07.2018**
(21) Application number: 09425499.2
(22) Date of filing: 04.12.2009
(51) Int. Cl.: B29B 11/14, B29C 49/06, B29B 11/08

(54) **PREFORM BODY PROFILE**
PROFIL FÜR VORFORMLINGSKÖRPER
PROFILE POUR CORPS DE PRÉFORME

(30) Priority: 30.12.2008 IT RM20080695
(43) Date of publication of application: 25.08.2010
(73) Proprietor: Pet Engineering S.r.L., 31020 San Vendemiano (Treviso) (IT)
(72) Inventor: Barel, Moreno, 31020 Refrontolo (TV) (IT); Zanette, Enrico Dino, 31010 Pianzano (TV) (IT); Baldo, Elena, 31015 Conegliano (TV) (IT); Tamagnone, Paola, 31015 Conegliano (TV) (IT)
(74) Representative: Dragotti, Gianfranco

(56) References cited:
- WO-A-2007/109910
- JP-A- 7 132 923
- JP-A- 2002 240 134

## Description

### 1.1 Background

In the last years, there has been a continuous research to obtain the lightest possible thermoplastic containers.

Initially, light-weighting was studied at the level of the bottle/perform profile not reducing the physical-mechanical behaviour of the bottle.

Afterwards, light-weighting was begun on the level of the neck, reducing the dimensions, the wall thickness, the thickness of the support ledge, etc... A known example is the change from PCO 1810 to PCO 19 to arrive finally to "PCO Corvaglia".

In this manner the global weight reduction has reached the actual limits.

Anyway, the need to use less material, for economical and environmental reasons, is becoming more pressing and imminent.

In some cases very low weights have been developed, but to obtain satisfactory mechanical behaviour with these containers escamotages such as adding nitrogen are used. In fact once the container is opened it becomes uneasy to handle.

In this context emerged the necessity to obtained containers with good mechanical performance but light in weight.

A detailed analysis of the weight distribution of the lightest produced bottles with the lightest known necks demonstrated that the sections with the most material were the neck and the area under the support ledge.

For example, some cases that were considered went from 40% to 26% of material accumulated in these sections. Therefore an ultra light-weight neck, which maintains the necessary rigidity to maintain its shape during production of the container and to maintain the resistance in the successive phases till the final use by the consumer, was developed without increasing the bottle body weight.

An excessive reduction in weight of the neck by reducing the width (s), in fact causes during the heating and blowing phases of the process problems such as the deformation of the neck and/or deformation of the neck support ledge which create complications in the successive phases of the bottling such as for example the transportation on guides, filling, capping, and palletizing. The neck can be deformed even in these last

Systems of preforms and moulds for producing bottles according to the state of the art are disclosed in WO2007109910, JP2002240134 and in figure 2. These systems correspond to the preamble of claim 1.

The new perform/mould profile of to the present invention and corresponding to the invention as defined by claim 1 permits the reduction of the width of the neck (s) to widths less than the actual limits which till now have been considered necessary to avoid the oval deformation caused by the effect of the major radial resistance of this geometry.

In this way, a bottle with a weight reduction of 30-40% with respect to those considered in the preliminary analysis was developed. Another bottle of another 14% lighter was also developed. In these containers, taking into account the initial considerations, only a 17% in weight of the material was accumulated in the neck and under the support ledge.

Another aspect to consider is that the caps are produced with widths that resist to the deformation of the neck. This invention, maintaining the rigidity, permits the reduction also of the weight of the caps.

The particular geometry of the neck profile and of the area under the support ledge allowing the possibility to increase the distance z gives benefits for the capping process and the transport of the bottle.

The greater is this dimension, easier is the transportation due to the greater surface area. The increase of this dimension also facilitates the capping process allowing the mandrels to easily grip the support ledge.

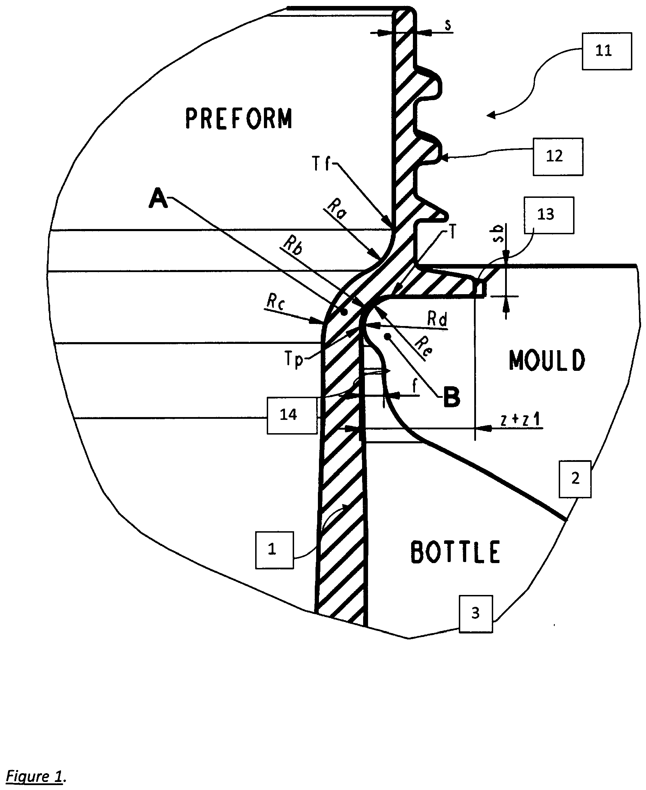

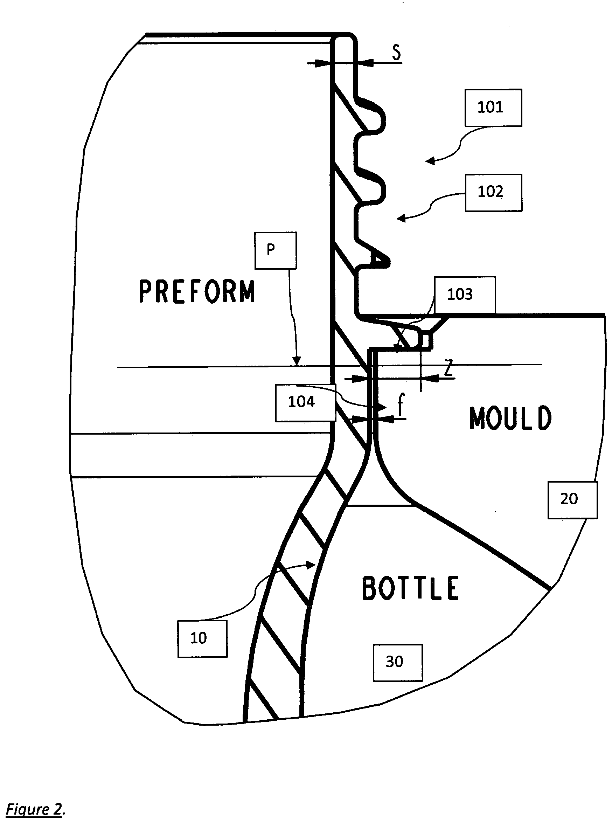

In the case of geometries of the type "swerve" (figure 1) this dimension (z + z1) increases to about 20 to 100% with respect to the classical cases (figure 2) according to the type of neck. It can also be confirmed that part of the available surface (z +z1), the invention consents the reduction of the diameter of the support ledge obtaining a further reduction of the neck weight.

The increase in the dimension z to z+z1 facilitates the application of typical handles in the large formats due to the major space available increasing security though the less weight of the neck.

Another important aspect of this invention is that it is suitable for the existing lines consisting of blowing machines, transportation lines and filling machines. This invention can also stimulate innovations in the projection and development of new systems.

The various types of moulds in use today can be used by simply substituting the collars where the support ledge is held.

### 1.2 Summary of the invention

The objective of this invention is to facilitate the light-weighting of the neck and of the perform without compromising the performance of the neck and the area under the support ledge during the blowing, filling, capping and transportation processes including also the final use of the bottle, that is maintaining the shape and rigidity of the neck the support ledge and of the area under the support ledge.

The neck maintains its round shape due to the reinforcement of the material at the level of the support ledge.

The other problem to avoid is the deformation of the support ledge: it is not improbable that during the heating and the blowing process the support ledge is upwardly deformed and this happens mainly if it is very light.

To avoid this, the neck of the bottle is close to the area under the support ledge of the perform and the bottle profile has a concave ring under the support ledge with a curved section (B) which creates a resistance to the tendency of the support ledge to rise. Practically, the material when blown adheres to the curve creating an internal ring between the support ledge and the area under the support ledge avoiding in that way the upward movement of the support ledge. The material behaves as if it is already touching the mould and therefore exerts the force of movement on this section instead of transferring the force to the support ledge.

The invention during the axial stretching process accumulates less material under the neck due to the fact that the ring under the support ledge in the bottle mould profile keeps the area under the support ledge of the perform at a certain distance from the mould (f in figure 1) which is sufficient to avoid the cooling of the plastic which can be pushed towards the bottom of the bottle without being blocked above the shoulder as easily occurs in the case reported in figure 2 (classical case). In practice the non-stretched zone is reduced with respect to the classical situations better distributing all of the material along the bottle.

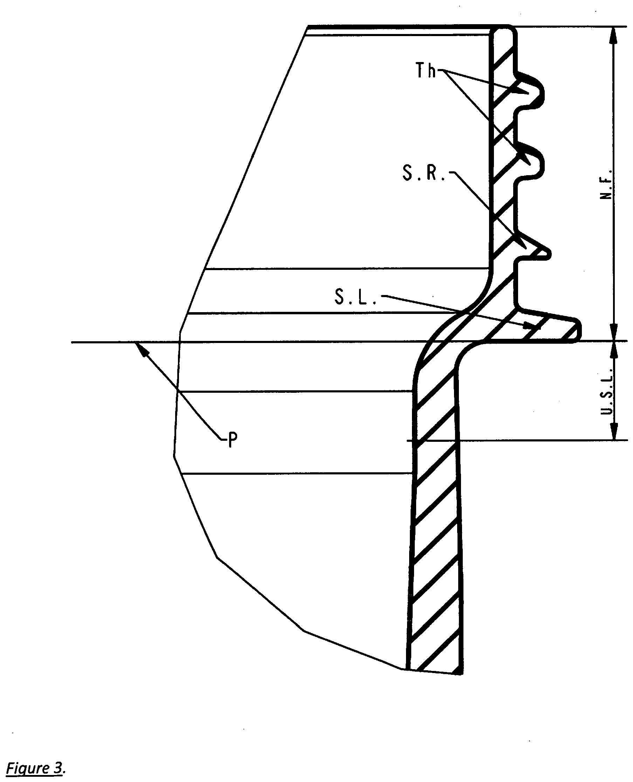

See the legend of figure 3 to better comprehend what has been described above:
T: thread;
N.F.: neck finish;
S.R: sealing ring;
S.L.: support ledge;
U.S.L.: area under the support ledge;
P.: support ledge plain.

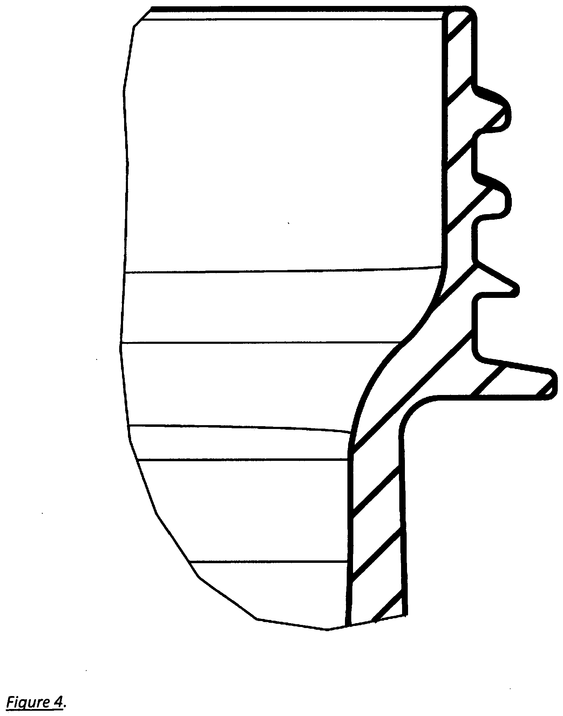

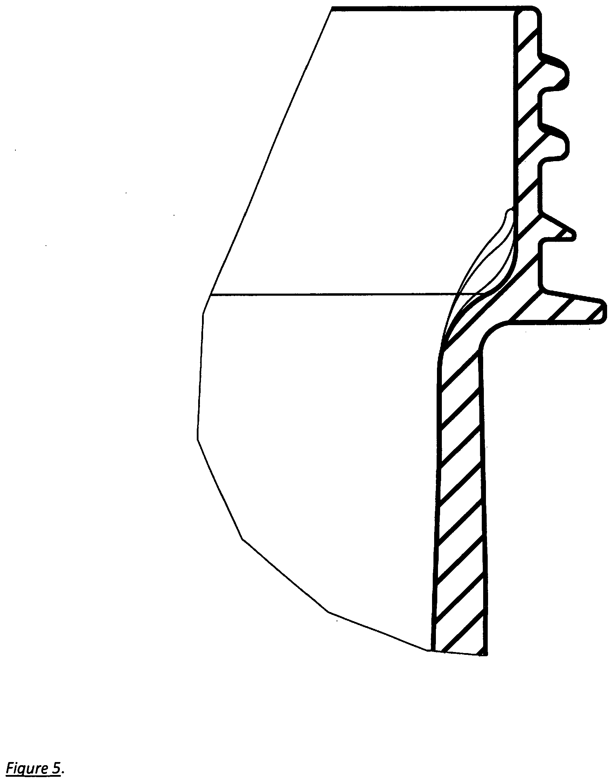

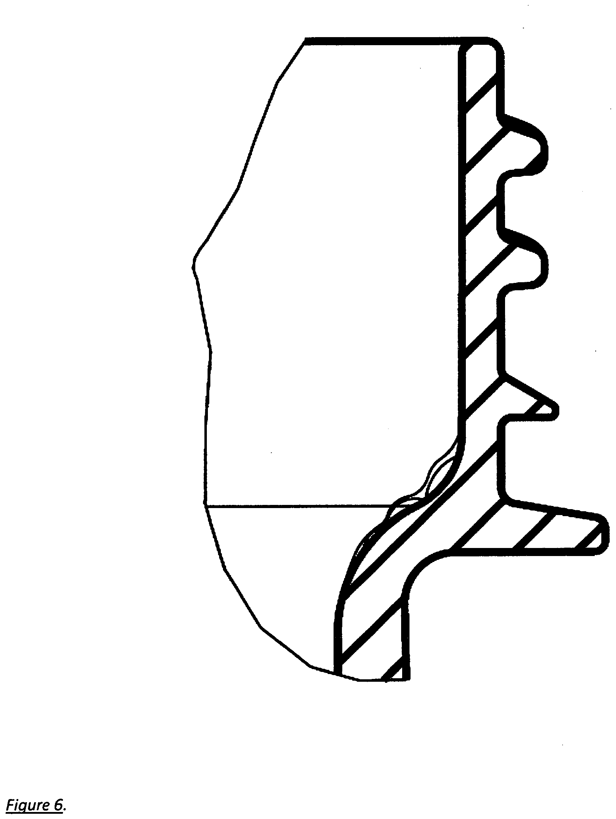

Figure 4, 5 and 6 demonstrates variants of the above describe profile with the reinforcement of the profile.

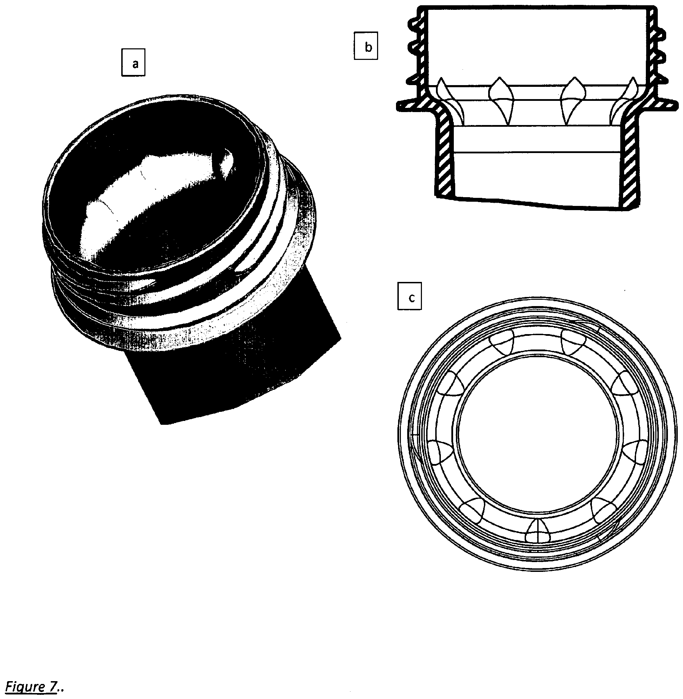

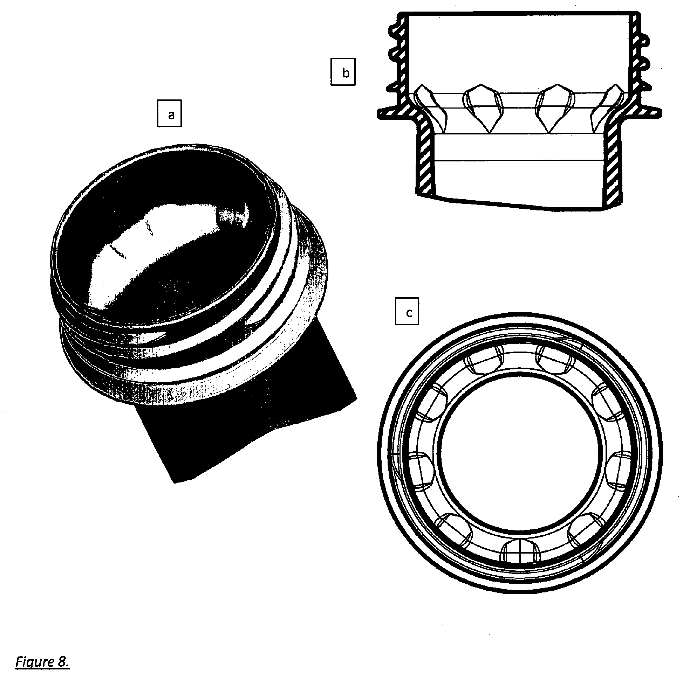

Figure 7 and 8 describe examples of re-enforcement with ribs.

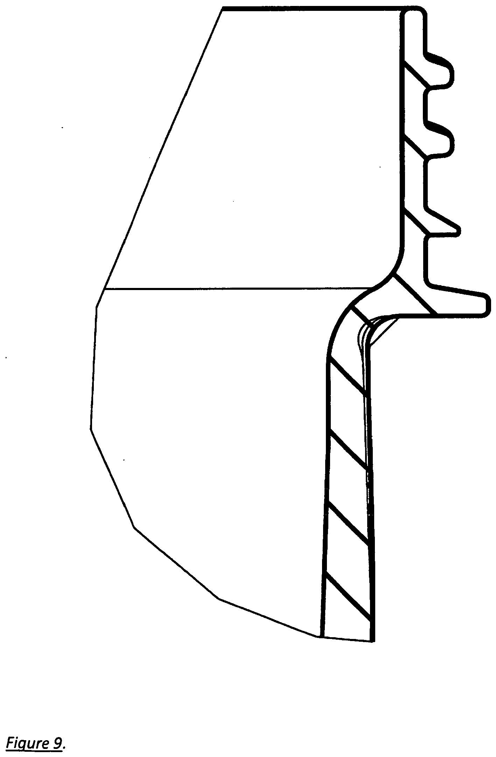

Figure 9 describes examples the external profile of the area under the support ledge.

The object of the present invention is that to propose a new internal profile of the perform at the neck level for the production of ultra-light-weight containers which maintain adequate physical-mechanical characteristics.

This object is feasible due to a perform profile together with a bottle profile at the height of the neck and of the area under the support ledge making this zone robust but at the same time reduced in weight with respect to the bottle body.

This invention is applicable to every existing neck finish and to every thermoplastic material (PET, OPP, PLA etc...).

## Claims

1. A system comprising a preform and a mould for producing a bottle,
the preform comprising:
- a neck finish (N.F.) comprising a support ledge (S.L.), a thread (T) and a sealing ring (S.R.);
- an area under the support ledge (U.S.L.); and
- a body preform;
- wherein the internal profile of the preform has a diameter reduction,
- wherein the external profile of the preform is tangentially connected in the area under the support ledge to the lower part of the support ledge forming a one fourth of a ring (A);
the system being **characterized in**
- the diameter reduction starting downwardly from the neck at a level that is higher than the level of the support ledge (S.L.); and
- wherein the mould in the area corresponding to the area under the
support ledge has a concave ring that partially follows the profile of the preform in the area under the support ledge (U.L.S.).

2. A system according to claim 1, **characterized in that** said one fourth of a ring (A) has a minimum width equal to the maximum width of the support ledge (S.L.).

3. A system according to claim 1, **characterized in that** the preform has an internal profile which tangentially connects to the internal profile of the neck finish.

4. A system according to claim 1, **characterized in that** the preform has an internal profile which tangentially connects to the internal profile of the preform body.

5. A system according to claim 1, **characterized in that** the preform has an external diameter in the area under the support ledge that is reduced by 0 -20% maximum with respect to the internal diameter of the neck.

6. A system according to claim 1, **characterized in that** the mould under the support ledge has a diameter that is about one tenth of a millimetre greater than the external diameter of the preform in correspondence to the plane of the support ledge or tangent to the tangent point T.

7. A system according to claim 1, **characterized in that** the mould has just under the support ledge a concave ring, parallel to the support ledge plane, which has a section that has two radius that follow the trend of the external profile of the ring of the area under the support ledge of the preform profile leaving about one tenth of a millimeter of space.

8. A system according to claim 2, **characterized in that** the profile of the ring is constituted of a radius Re that starts from the tangent point T with a radius slightly superior to Rb to continue with a radius Rd which is approximately equal to Rb.

## Patentansprüche

1. System, das ein Formteil und eine Gussform zum Herstellen einer Flasche aufweist, wobei das Formteil aufweist:
- einen Halsabschluss (N.F.), der einen Stützvorsprung (S.L.), ein Gewinde (T) und einen Dichtring (S.R.) aufweist;
- einen Bereich unter dem Stützvorsprung (U.S.L.); und
- ein Körperformteil;
- wobei das Innenprofil des Formteils eine Durchmesserverringerung hat,
- wobei das Außenprofil des Formteils, ein Viertel eines Rings (A) bildend, in dem Bereich unter dem Stützvorsprung mit dem unteren Teil des Stützvorsprungs tangential verbunden ist;
wobei das System **dadurch gekennzeichnet ist, dass**
- die Durchmesserverringerung abwärts von dem Hals in einer Höhe, die höher als die Höhe des Stützvorsprungs (S.L.) ist, beginnt; und
- wobei die Gussform in dem Bereich, der dem Bereich unter dem Stützvorsprung entspricht, einen konkaven Ring hat, der dem Profil des Formteils in dem Bereich unter dem Stützvorsprung (U.L.S.) teilweise folgt.

2. System gemäß Anspruch 1, **dadurch gekennzeichnet, dass** das eine Viertel eines Rings (A) eine minimale Breite hat, die gleich der maximalen Breite des Stützvorsprungs (S.L.) ist.

3. System gemäß Anspruch 1, **dadurch gekennzeichnet, dass** das Formteil ein Innenprofil hat, das sich tangential an das Innenprofil des Halsabschlusses anschließt.

4. System gemäß Anspruch 1, **dadurch gekennzeichnet, dass** das Formteil ein Innenprofil hat, das sich tangential an das Innenprofil des Körperformteils anschließt.

5. System gemäß Anspruch 1, **dadurch gekennzeichnet, dass** das Formteil in dem Bereich unter dem Stützvorsprung einen Außendurchmesser hat, der bezüglich des Innendurchmessers des Halses maximal 0 - 20% verringert ist.

6. System gemäß Anspruch 1, **dadurch gekennzeichnet, dass** die Gussform unter dem Stützvorsprung einen Durchmesser hat, der, in Verbindung mit der Ebene des Stützvorsprungs oder tangential zu dem Tangentenpunkt T, ungefähr ein Zehntel eines Millimeters größer als der Außendurchmesser des Formteils ist.

7. System gemäß Anspruch 1, **dadurch gekennzeichnet, dass** die Gussform parallel zu der Ebene des Stützvorsprungs gleich unter dem Stützvorsprung einen konkaven Ring hat, der einen Abschnitt hat, der zwei Radii hat, die ungefähr ein Zehntel eines Millimeters eines Raums weggehend, der Neigung des Außenprofils des Rings des Bereichs unter dem Stützvorsprung des Formteilprofils folgen.

8. System gemäß Anspruch 2, **dadurch gekennzeichnet, dass** das Profil des Rings aus einem Radius Re gebildet ist, der von dem Tangentenpunkt T mit einem zu Rb geringfügig höher gelegenen Radius beginnt, um sich mit einem Radius Rd, der ungefähr gleich zu Rb ist, fortzusetzen.

## Revendications

1. Système comprenant une préforme et un moule pour fabriquer une bouteille, la préforme comprenant :
- une finition de goulot (N.F.) comprenant un bord de support (S.L.), un filetage (T) et une bague d'étanchéité (S.R.) ;
- une zone située sous le bord de support (U.S.L.) ; et
- un corps de préforme ;
- dans lequel le profil interne de la préforme présente une réduction de diamètre,
- dans lequel le profil externe de la préforme est relié de manière tangentielle dans la zone située sous le bord de support à la partie inférieure du bord de support formant un quart d'une bague (A) ;
le système étant **caractérisé en ce que**
- la réduction de diamètre a lieu du goulot vers le bas, à un niveau supérieur au niveau du bord de support (S.L.) ; et
- dans lequel le moule dans la zone correspondant à la zone située sous le bord de support possède une bague concave qui suit partiellement le profil de la préforme dans la zone située sous le bord de support (U.L.S.).

2. Système selon la revendication 1, **caractérisé en ce que** ledit un quart d'une bague (A) présente une largeur minimale égale à la largeur maximale du bord de support (S.L.).

3. Système selon la revendication 1, **caractérisé en ce que** la préforme présente un profil interne qui est relié de manière tangentielle au profil interne de la finition de goulot.

4. Système selon la revendication 1, **caractérisé en ce que** la préforme présente un profil interne qui est relié de manière tangentielle au profil interne du corps de préforme.

5. Système selon la revendication 1, **caractérisé en ce que** la préforme présente un diamètre externe dans la zone située sous le bord de support qui est réduit de 0 à 20% au maximum par rapport au diamètre interne du goulot.

6. Système selon la revendication 1, **caractérisé en ce que** le moule sous le bord de support présente un diamètre environ un dixième de millimètre supérieur au diamètre externe de la préforme en correspondance avec le plan du bord de support ou tangentiel par rapport au point tangent T.

7. Système selon la revendication 1, **caractérisé en ce que** le moule possède, juste sous le bord de support, une bague concave, parallèle au plan du bord de support, qui présente une section qui possède deux rayons qui suivent la tendance du profil externe de la bague de la zone située sous le bord de support du profil de préforme en laissant environ un dixième de millimètre d'espace.

8. Système selon la revendication 2, **caractérisé en ce que** le profil de la bague est constitué d'un rayon Re qui part du point tangent T, avec un rayon légèrement supérieur à Rb, pour continuer avec un rayon Rd qui est approximativement égal à Rb.
